# EUROPEAN PATENT SPECIFICATION

(11) **EP 2 397 447 B1**
(45) Date of publication and mention of the grant of the patent: **02.10.2019**
(21) Application number: 11003208.3
(22) Date of filing: 15.04.2011
(51) Int. Cl.: C03B 18/06, C03B 18/22

(54) **Glass plate manufacturing apparatus and manufacturing method**
Apparat und Methode zur Herstellung einer Glasplatte
Appareil et méthode pour produire une plaque de verre

(30) Priority: 17.06.2010 JP 2010138642
(43) Date of publication of application: 21.12.2011
(73) Proprietor: AGC Inc., Tokyo 100-8405 (JP)
(72) Inventor: Takiguchi, Tetsushi, Chiyoda-Ku Tokyo 100-8405 (JP)
(74) Representative: Müller-Boré & Partner Patentanwälte PartG mbB

(56) References cited:
- DE-A1-102007 028 977
- DE-B3-102007 028 976
- JP-A- 2009 107 913
- US-A- 3 661 548

## Description

The present invention relates to a glass plate manufacturing apparatus and manufacturing method.

A glass plate manufacturing apparatus by float glass process is a device that forms a glass ribbon by continuously supplying molten glass onto a molten metal bath surface and that then carries the glass ribbon from upperstream to downstream on the bath surface. In the apparatus, a glass ribbon is formed into a band plate-shape utilizing the smooth bath surface of the molten metal (typically, molten tin). At that time, an amount of heat generated by a plurality of heaters provided above the bath surface is controlled in order to control the temperature distribution of the glass ribbon.

The plurality of heaters are provided as a plurality of rows arranged in the conveying direction of the glass ribbon. In each row, a plurality of heaters are provided in the width direction of the glass ribbon. The temperature distribution of the glass ribbon is controlled by individually controlling the amounts of heat generated by each of heaters. Accordingly, a glass plate with small variation in thickness can be manufactured.

However, if the amounts of heat generated by the plurality of heaters are individually controlled, the number of the controllers of the heaters is large. Accordingly, the apparatus is increased in size. The management of the apparatus is complicated.

Thus, the following technique has been proposed (see, e.g., Patent Documents 1 and 2). That is, a heater area provided with a plurality of heaters is sectioned into subareas in the conveying direction and width direction of the glass ribbon, so that a plurality of heaters are provided in each subarea. In addition, a plurality of heaters provided in each single subarea are collectively controlled by an associated single controller.

Patent Document 1: JP-A-8-325024
Patent Document 2: WO 09/054411

However, in a natural condition, a glass ribbon is expanded until the thickness thereof reaches a value (hereinafter referred to as an "equilibrium thickness") determined due to surface tension or gravity. The equilibrium thickness depends upon surface tension, as described above, and varies with the type or the temperature of glass and is, e.g., 6 to 7 millimeters (mm).

Generally, when the thickness of the glass ribbon is set to be less than the equilibrium thickness, the glass ribbon is stretched to a thin thickness by increasing the rate of drawing the glass ribbon. At that time, in order to prevent the width of the glass ribbon from being narrow, end portions in the width direction of the glass ribbon are supported by rotary members called "top rolls".

Especially, in recent years, thin glass substrates (whose thickness is, e.g., 0.7 mm or less) for flat panel displays (FPD) such as liquid crystal displays (LCD) have been manufactured. Such thin glass plates are required to be reduced in thickness to a thinner value as compared with conventional glass plates. Accordingly, a large number of top rolls are needed. Further, such thin glass plates are more affected by variation in the thickness.

If such top rolls are used, a glass plate manufacturing apparatus and manufacturing method differing from a conventional one are needed.

The invention is accomplished in view of the above problems. It is an object of the invention to provide a glass plate manufacturing apparatus and manufacturing method appropriate for the use of the top rolls.

In order to accomplish the above object, the present invention provides the following glass plate manufacturing apparatus and manufacturing : method.

The present invention provides a glass plate manufacturing apparatus which forms a glass ribbon by continuously supplying molten glass to a bath surface of a molten metal bath, and carries the glass ribbon forward along the bath surface, the apparatus comprising:
a plurality of pairs of top roll bodies configured to support end portions in a width direction of the glass ribbon;
a plurality of heaters provided in a predetermined heater area above the glass ribbon; and
a plurality of controllers,
wherein the heater area is divided to a plurality of rows arranged along a conveying direction of the glass ribbon,
wherein one or more of the heaters are provided in each subarea obtained by sectioning each of the rows in the width direction of the glass ribbon,
wherein the heater(s) within the respective subarea are collectively controlled by one of the controllers, which is provided corresponding to the subarea,
wherein a boundary between every two adjacent rows is taken as a dividing portion and a boundary between every two adjacent subareas in each of the rows is taken as a sectioning portion, and
wherein at least one discontinuous point is present between sectioning portions in one of two adjacent rows in the heater area located between the mostupstream pair of the top rolls and the mostdownstream pair of the top rolls, wherein each of the controllers is configured by a microcomputer; and wherein in the heater area located between the mostupstream pair of the top rolls and the mostdownstream pair of the top rolls, the subareas are provided along a predetermined curved flow line of the glass ribbon and any of two or more consecutive rows among the plurality of rows are sectioned in the width direction so that the flow line passes under said subarea, wherein the predetermined curved flow line of the glass ribbon is a flow path through which a predetermined part located in the width direction of the glass ribbon steadily passes.

The present invention provides a glass plate manufacturing method comprising: forming a glass ribbon by continuously supplying molten glass to a bath surface of a molten metal bath; and carrying the glass ribbon from an upstream side to a downstream side on the bath surface,
wherein a temperature distribution is adjusted by a plurality of heaters and a plurality of controllers provided above the bath,
wherein a heater area provided with the plurality of heaters includes subareas configured by dividing the heater area into a plurality of rows in a conveying direction of the glass ribbon and by sectioning each of the rows into subareas in a width direction of the glass ribbon,
wherein the heater(s) provided within the respective subareas are collectively controlled by an associated one of the controllers,
wherein end portions of the glass ribbon are supported by a plurality of pairs of top rolls provided along the conveying direction of the glass ribbon, and
wherein at least one discontinuous point is present between sectioning portions in one of two adjacent rows among the plurality of rows in the heater area located between the mostupstream pair of the top rolls and the mostdownstream pair of the top rolls, wherein each of the controllers is configured by a microcomputer; and wherein in the heater area located between the mostupstream pair of the top rolls and the mostdownstream pair of the top rolls, the subareas are provided along a predetermined curved flow line of the glass ribbon and any of two or more consecutive rows among the the plurality of rows are sectioned in the width direction so that the flow line passes under said subarea, wherein the predetermined curved flow line of the glass ribbon is a flow path through which a predetermined part located in the width direction of the glass ribbon steadily passes.

A glass plate manufactured by a manufacturing method of the present invention is preferred that the difference between a maximum thickness and a minimum thickness among a given range of 2000 mm in the width direction is 30 µm or less.

A glass plate manufactured by a manufacturing method of the present invention is preferred that the difference between a maximum thickness and a minimum thickness among a given range of 3000 mm in the width direction is 45 µm or less.

A glass plate manufactured by a manufacturing method of the present invention is preferred that the difference between a maximum thickness and a minimum thickness among a given range of 3000 mm in the width direction is 35 µm or less.

A glass plate manufactured by a manufacturing method of the present invention is preferred that the glass plate is a glass plate containing, as represented by mass percentage based on oxides:
SiO₂: 50 to 66 mass%;
Al₂O₃: 10.5 to 24 mass%;
B₂O₃: 0 to 12 mass%;
MgO: 0 to 8 mass%;
CaO: 0 to 14.5 mass%;
SrO: 0 to 24 mass%;
BaO: 0 to 13.5 mass%;
MgO + CaO + SrO + BaO: 9 to 29.5 mass%; and
ZrO₂: 0 to 5 mass%.

A glass plate manufactured by a manufacturing method of the present invention is preferred that the glass plate is a glass plate containing, as represented by mass percentage based on oxides:
SiO₂: 58 to 66 mass%;
Al₂O₃: 15 to 22 mass%;
B₂O₃: 5 to 12 mass%;
MgO: 0 to 8 mass%;
CaO: 0 to 9 mass%;
SrO: 3 to 12.5 mass%;
BaO: 0 to 2 mass%; and
MgO + CaO + SrO + BaO: 9 to 18 mass%.

According to the present invention, the glass plate manufacturing apparatus and manufacturing method appropriate for the use of the top rolls can be provided.

FIG. 1 is a plan view illustrating the internal structure of a glass plate manufacturing apparatus.
FIG. 2 is a side view of FIG. 1.
FIG. 3 is an explanatory view (I) illustrating the subareas of a heater area.
FIG. 4 is an explanatory view (II) illustrating the subareas of a heater area.
FIG. 5 is an explanatory view (III) illustrating the subareas of a heater area.
FIG. 6 is an explanatory view (IV) illustrating the subareas of a heater area.
FIG. 7 is an explanatory view (V) illustrating the subareas of a heater area.
FIG. 8 is an explanatory view illustrating the subareas of a heater area in Comparative Example.

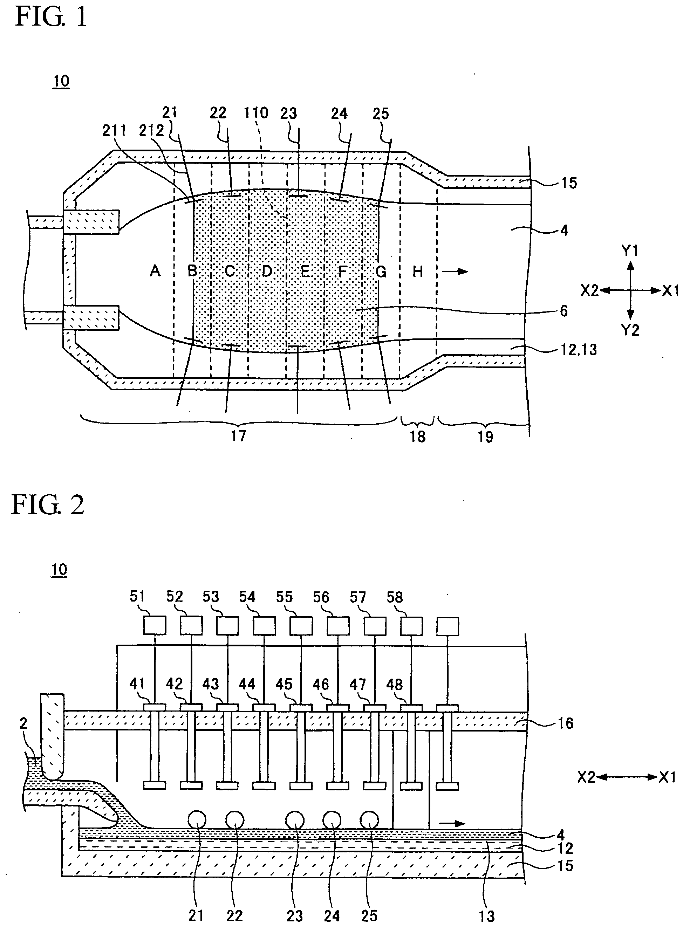

FIG. 1 is a plan view illustrating the internal structure of a glass plate manufacturing apparatus 10 according to an embodiment FIG. 2 is a side view of FIG. 1.

The glass plate manufacturing apparatus 10 by float glass process (hereinafter also referred to simply as "manufacturing apparatus 10") is, for example, a device configured, as illustrated in FIGS. 1 and 2, to form a glass ribbon 4 by continuously supplying molten glass 2 to the bath surface 13 of molten metal (typically, molten tin) 12 and to carry the glass ribbon 4 from upperstream to downstream on the bath surface 13 in the direction of arrow XI. In the manufacturing apparatus 10, the glass ribbon 4 is formed into a band plate-shape utilizing the smooth bath surface 13 of the molten metal 12. The formed glass ribbon 4 is conveyed to an annealing furnace. After annealed in the annealing furnace, the glass ribbon 4 is cut to a predetermined dimension by a cutting machine. Thus, the glass ribbon 4 is formed into a glass plate as a product.

The manufacturing apparatus 10 includes a bath 15 accommodating the molten metal 12, a ceiling 16 provided above the bath 15, a plurality of heaters 41 to 48, and a plurality of controllers 51 to 58. A region in the bath 15 includes a wide upstream zone 17 (hereinafter referred to as a "wide bath zone 17"), a narrow downstream zone 19, and a midstream zone 18 intervened between the upstream zone 17 and the downstream zone 19. In the present specification, the term "below" means "vertically downward", while the term "above" means "vertically upward". The term "a width direction" means "a direction perpendicular to a direction of conveying a glass ribbon on the bath-surface of a molten metal bath".

The plurality of heaters 41 to 48 heat the glass ribbon 4 passing therebelow, under the control of the plurality of controllers 51 to 58. The plurality of heaters 41 to 48 are provided above the bath surface 13 of the molten metal 12 of the bath. For example, as illustrated in FIG. 2, the plurality of heaters 41 to 48 are suspended from the ceiling 16. The heaters 41 to 48 are provided, for example, in such a manner that it is arranged like a matrix having rows arranged in the conveying direction (i.e., the direction of arrows X1-X2) of the glass ribbon 4, and having columns arranged in the width direction (i.e., the direction of arrows Y1-Y2) of the glass ribbon 4.

For example, an electric heater (such as an electric heater described in WO2006/085552) heated by being energized is used as each of the heaters 41 to 48. The shape of each of the heaters 41 to 48 is not limited. However, for example, a bar-shaped heater can be used. The temperature distribution of the glass ribbon 4 can be controlled by controlling an amount of heat generated in each of the heaters 41 to 48.

The plurality of controllers 51 to 58 are devices controlling an amount of heat generated in each of the plurality of heaters 41 to 48. Each of the controllers 51 to 58 is configured by a microcomputer or the like.

The heater area provided with the plurality of heaters 41 to 48 is sectioned into a plurality of subareas, though the subareas are described below in detail. Each subarea is provided with the plurality of heaters that are collectively controlled by an associated single controller. Consequently, the number of the controllers can be reduced. In each subarea, several to tens of electric heaters are arranged. The amount of heat generated in the electric heaters is controlled in subarea unit.

The plurality of heaters provided in each single subarea can be collectively controlled by the associated single controller in such a manner that the amounts of heat generated in the plurality of heaters are substantially equal to one another.

As illustrated in FIG. 1, first, the heater area is divided into a plurality of rows A to H arranged in the conveying direction (i.e., the direction of arrows X1-X2) of the glass ribbon 4. The number of rows is appropriately set according to forming conditions such as the type of glass and the size of the bath 15. Preferably, the number of rows provided above the wide bath zone 17 ranges from 4 to 15. If the number of rows is too small, it is difficult to control the temperature distribution in the conveying direction of the glass ribbon 4. On the other hand, if the number of rows is too large, the number of controllers 51 to 58 becomes too large. Thus, the size of the manufacturing apparatus 10 is increased. In addition, the management of the manufacturing apparatus 10 becomes complicated.

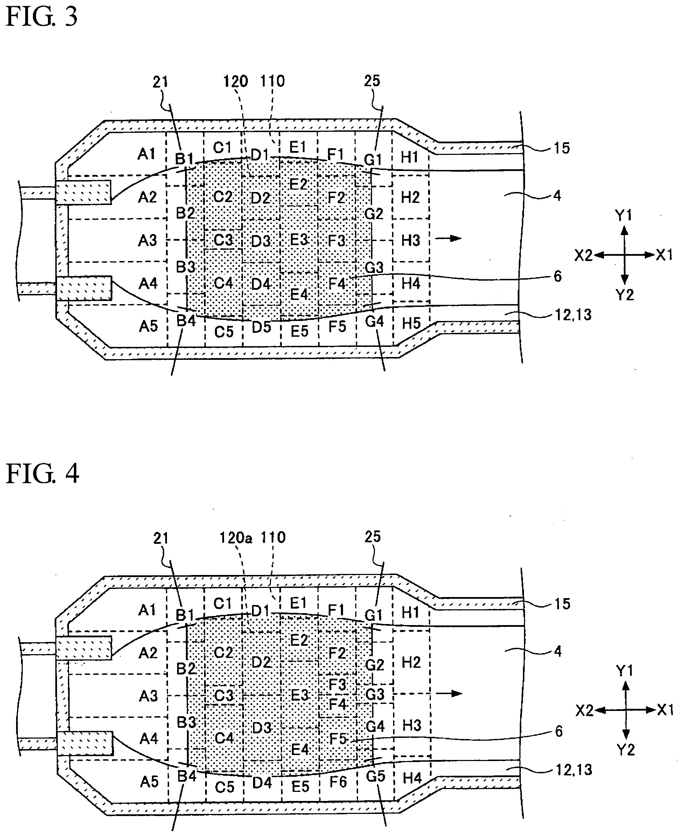

As illustrated in, e.g., FIG. 3, each of the rows A to H is sectioned into a plurality of subareas arranged in the width direction (i.e., the direction of arrows Y1-Y2) of the glass ribbon 4. Preferably, the sectioning of the rows is performed symmetrically with respect to the central line in the conveying direction of the glass ribbon 4. Additionally, though the number of subareas in each row is appropriately set according to forming conditions such as the type of glass and the size of the bath 15, the number of subareas of at least one row provided above the wide bath zone 17 ranges preferably from 4 to 30, more preferably, 4 to 20, and even more preferably, 4 to 15. If the number of subareas is too small, it is difficult to sufficiently control the temperature distribution in the width direction of the glass ribbon 4. On the other hand, if the number of subareas is too large, the number of controllers 51 to 58 becomes too large. Thus, the size of the manufacturing apparatus 10 is increased. In addition, the management of the manufacturing apparatus 10 becomes complicated.

Two rows adjoining in the conveying direction of the glass ribbon 4 are divided by the dividing portion 110. The dividing portion 110 is located substantially at the center between actual heaters adjoining each other in the conveying direction of the glass ribbon 4. On the other hand, two subareas adjoining each other in the width direction of the glass ribbon 4 are sectioned by the sectioning portion 120 (see FIG. 3 or the like). The sectioning portion 120 is located substantially at the center between actual heaters adjoining each other in the width direction of the glass ribbon 4.

The manufacturing apparatus 10 further includes a plurality of pairs of top rolls 21 to 25. A plurality of pairs of top rolls 21 to 25 are rotary members provided along the conveying direction (i.e., the direction of arrows XI-X2) of the glass ribbon 4 and configured to support both end portions in the width direction of the glass ribbon 4.

The plurality of pairs of top rolls 21 to 25 are provided in the wide bath zone 17. The plurality of pairs of top rolls 21 to 25 (more precisely, top roll bodies to be described below) can be provided in a forming region of the glass ribbon 4 (i.e., a region in which the viscosity of the glass ribbon 4 ranges from 10^{4.5} deci-Pascal-seconds (dPa·s) to 10^{7.5} dPa·s).

Each pair of the top rolls 21 to 25 is arranged at both sides in the width direction of the glass ribbon 4 to face each other, and prevent the width of the glass ribbon 4 from being narrowed due to surface tension. Hereinafter, the configuration of the mostupstream top roll 21 is described. However, the configuration of each of the other top rolls 22 to 25 is similar to that of the mostupstream top roll 21.

The top roll 21 is configured by a top roll body 211 supporting the end portions in the width direction of the glass ribbon 4, and a rotary shaft 212 connected to the top roll body 211. When the rotary shaft 212 is rotated by a drive unit such as an electric motor, the top roll body 211 feeds the end portions in width direction of the glass ribbon 4 to a downstream side while rotating.

The top roll body 211 is formed to a circular disk-shape, and configured so that an outer circumferential surface thereof is contacted with the end portions in the width direction of the glass ribbon 4. A plurality of protrusions are provided on the outer circumferential surface along a circumferential direction to prevent the top roll from slipping.

The number of the pairs of top rolls installed in the apparatus is appropriately set according to the forming conditions such as the type of glass and a target thickness thereof. The number of the pairs of top rolls is, e.g., 4 to 30, preferably, 10 to 30 (only 5 pairs of top rolls are illustrated in FIG. 1). There is a tendency that the thinner the target thickness of the glass plate is, the larger the number of top rolls installed in the apparatus is.

According to the present embodiment, in the heater area located above a predetermined area 6 of the glass ribbon 4, one or more sectioning portions 120 for sectioning each row in the width direction (i.e., the direction of arrows Y1-Y2) are out of alignment between adjacent two of rows into which the heater area is divided in the conveying direction of the glass ribbon.

The predetermined area 6 of the glass ribbon 4 means a region between the mostupstream pair of top rolls 21 and the most downstream pair of top rolls 25, as indicated by hatching with a dotted pattern illustrated in FIG. 3. More particularly, the predetermined area 6 is a region between a contact position at which the mostupstream pair of top rolls 21 are contact with the glass ribbon 4, and another contact position at which the mostdownstream pair of top rolls 25 are contacted with the glass ribbon 4. The expression "between adjacent two of rows" indicates the dividing portion 110 for dividing the heater area into the adjacent two rows.

For example, as illustrated in FIG. 3, in the heater area located above the predetermined area 6 of the glass ribbon 4, a sectioning portion 120 for sectioning the row C into the subareas C2 and C3, and a sectioning portion 120 for sectioning the row D into the subareas D2 and D3 are discontinuous to each other and out of alignment between the adjacent rows C and D. Thus, a part of the glass ribbon 4 which has passed under the sectioning portion 120 for sectioning the row C into the subareas C2 and C3, passes under the subarea D3 (i.e., between the sectioning portions 120) in the downstream row D.

If adjacent subareas in the width direction in a row differ from each other in the amount of generated heat per unit area, an abrupt temperature difference in the width direction occurs in the vicinity of the sectioning portion 120 for sectioning between the adjacent subareas. The temperature difference also occurs at an associated part of the glass ribbon 4 passing under the sectioning portion 120. When the glass ribbon 4 passes under a downstream row, the part of the glass ribbon 4, in which the temperature difference is caused, passes under the subarea. At that time, the above temperature difference in the glass ribbon 4 is alleviated. Consequently, the variation in the thickness of the glass ribbon 4 can be reduced.

According to the present embodiment, at least one place, at which the sectioning portions 120 are out of alignment, exists above the predetermined area 6. In addition, in the predetermined area 6, the glass ribbon 4 is restrained by the plurality of pairs of top rolls 21 to 25 from being narrowed. Consequently, the apparatus can effectively give an advantage in reducing variation in the thickness. This is because the glass ribbon 4 is liable to shrink in the width direction in a natural state, so that the thickness thereof easily changes.

This advantage is more pronounced with reduction in the thickness of the glass ribbon 4, because the thinner the thickness of the glass ribbon 4 is, the more easily the width of the glass ribbon 4 decreases due to surface tension. Accordingly, the invention is suitable for a case where the thickness of a glass plate is 3 mm or less, more suitable in a case of the thickness of 2 mm or less, further suitable in a case of the thickness of 1.5 mm or less, and particularly suitable in a case of the thickness of 0.7 mm or less. It is desirable from the viewpoint of handling ability that the thickness of the glass plate is 0.1 mm or more.

The invention is preferable in manufacturing a glass substrate for a liquid crystal display. The following alkali-free glasses (1) to (3) each having a composition described below exemplify the glass substrate.
(1) An alkali-free glass containing, as represented by mass percentage based on oxides:
   SiO₂: 50 to 66 mass%;
   Al₂O₃: 10.5 to 24 mass%;
   B₂O₃: 0 to 12 mass%;
   MgO: 0 to 8 mass%;
   CaO: 0 to 14.5 mass%;
   SrO: 0 to 24 mass%;
   BaO: 0 to 13.5 mass%;
   MgO + CaO + SrO + BaO: 9 to 29.5 mass%; and
   ZrO₂: 0 to 5 mass%.
(2) An alkali-free glass containing, as represented by mass percentage based on oxides:
   SiO₂: 58 to 66 mass%;
   Al₂O₃: 15 to 22 mass%;
   B₂O₃: 5 to 12 mass%;
   MgO: 0 to 8 mass%;
   CaO: 0 to 9 mass%;
   SrO: 3 to 12.5 mass%;
   BaO: 0 to 2 mass%; and
   MgO + CaO + SrO + BaO: 9 to 18 mass%.
(3) An alkali-free glass containing, as represented by mass percentage based on oxides:
   SiO₂: 50 to 61.5 mass%;
   Al₂O₃: 10.5 to 18 mass%;
   B₂O₃: 7 to 10 mass%;
   MgO: 2 to 5 mass%;
   CaO: 0 to 14.5 mass%;
   SrO: 0 to 24 mass%;
   BaO: 0 to 13.5 mass%; and
   MgO + CaO + SrO + BaO: 16 to 29.5 mass%.

The place at which the sectioning portions 120 are discontinuous corresponds preferably to a part of a glass plate, where the thickness is greatly deviated from an average value thereof in the glass plate. Further, the place at which the sectioning portions 120 are discontinuous are preferably included in a zone in which the viscosity of the glass ribbon 4 passing thereunder ranges from 10^{4.5} dPa·s to 10^{6.5} dPa·s. In addition, above the predetermined area 6, all sectioning portions 120 are preferably discontinuous between all of adjacent two rows of the rows into which the glass ribbon is divided in the conveying direction thereof.

The glass plate obtained in this manner has an even thickness. It is difficult by a conventional float glass process to manufacture such a glass plate. In such a glass plate, the difference between a maximum thickness and a minimum thickness among a given range of 2000 mm in the width direction (i.e., the direction of arrows Y1-Y2) can be set to be 30 µm or less. Further, the difference between a maximum thickness and a minimum thickness among a given range of 3000 mm in the width direction (i.e., the direction of arrows Y1-Y2) can be set to be 45 µm or less, and can be also set to be 35 µm or less. Accordingly, the patterning of thin film transistors (TFTs) and color filters (CFs) on a surface of the glass plate can be achieved with good accuracy using photolithography techniques and the like.

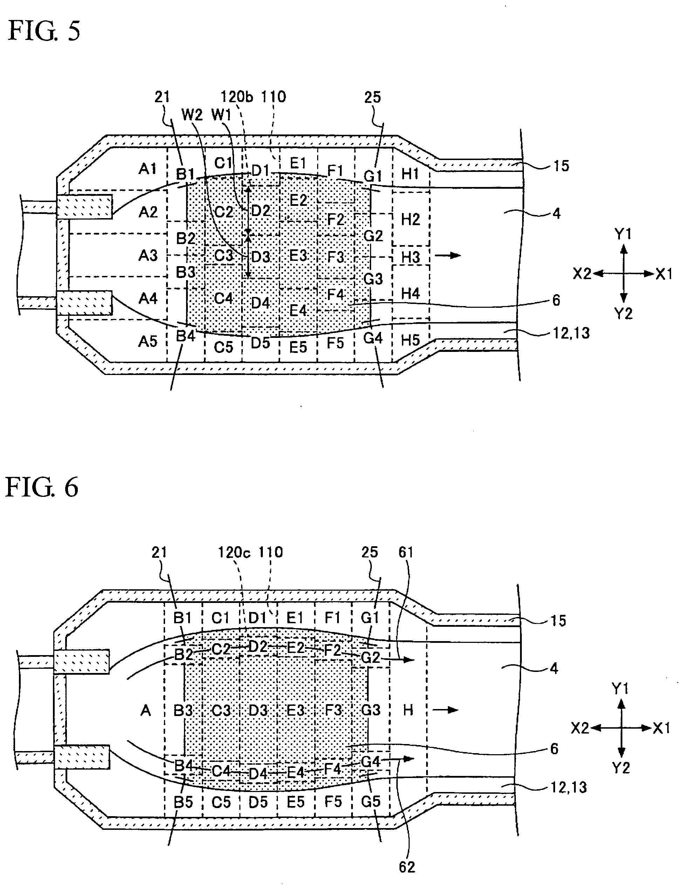

Next, other embodiments of the heater area illustrated in FIG. 3 are described hereinafter with reference to FIGs. 4 and 5. The sectioning illustrated in each of these figures (including FIG. 3) is performed symmetrically with respect to the central line in the conveying direction of the glass ribbon 4.

In the embodiment illustrated in FIG. 4, in the heater area located above the predetermined area 6 of the glass ribbon 4, rows each of which is sectioned in the width direction into an even number of subareas, and rows each of which is sectioned in the width direction into an odd number of subareas are alternately arranged. Thus, similarly to the embodiment illustrated in FIG. 3, at least one place, at which sectioning portions 120a are discontinuous to each other, exists in the heater area located above the predetermined area 6. Consequently, similar advantages can be obtained.

In the embodiment illustrated in FIG. 5, in the heater area located above the predetermined area 6 of the glass ribbon 4, each of the rows B to G is sectioned unequally in the width direction into subareas. More specifically, in each of the rows B to G, the width W1 of at least one subarea differs from the width W2 of another subarea. In addition, similar to the embodiment illustrated in FIG. 3, at least one place, at which the sectioning portions 120b are discontinuous, exists in the heater area located above the predetermined area 6. Thus, similar advantages can be obtained.

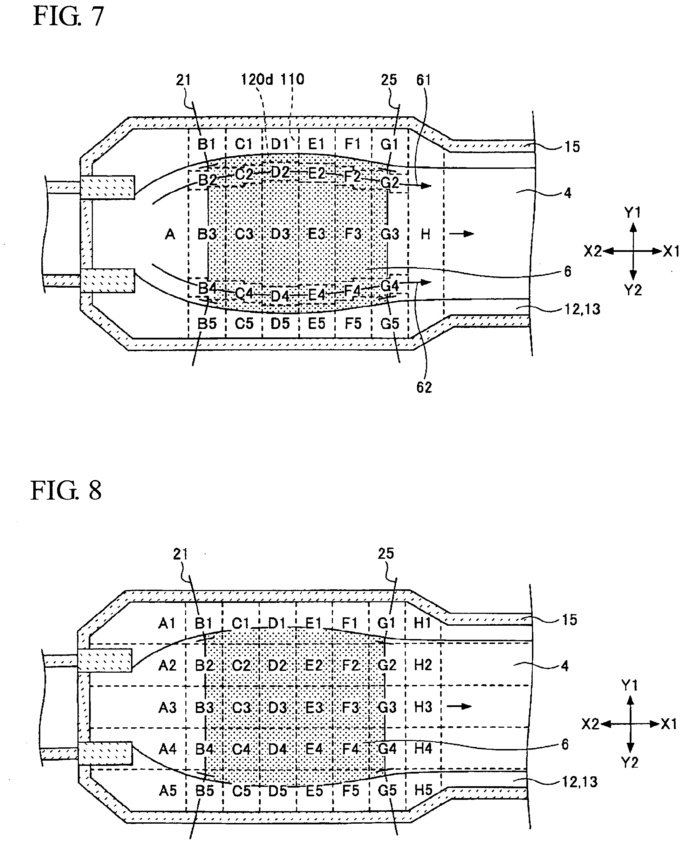

Next, with reference to FIGs. 6 and 7, other embodiments of the heater area illustrated in FIG. 3 are described hereinafter. The sectioning illustrated in each of these figures is performed symmetrically with respect to the central line in the conveying direction of the glass ribbon 4.

In the embodiment according to the invention illustrated in FIG. 6, in the heater area located above the predetermined area 6 of the glass ribbon 4, the sectioning portions 120c are discontinuous at one or more places between any of adjacent two of the plurality of rows B to G, similarly to the embodiment illustrated in FIG. 3. Thus, similar advantages can be obtained.

In addition, according to the embodiment illustrated in FIG. 6, in the heater area located above the predetermined area 6 of the glass ribbon 4, any of two or more consecutive rows B to G are sectioned in the width direction along a plurality of predetermined flow lines 61 and 62 in the glass ribbon 4. Each of the flow lines 61 and 62 is formed into a curved-shape. The sectioning portions 120c are linearly shaped.

The term "a predetermined flow line" of the glass ribbon 4 means a flow path through which a predetermined part located in the width direction of the glass ribbon 4 steadily passes.

As shown in FIG. 6, a part of the glass ribbon 4, which passes under the subarea B2 of the upstream row B, mostly passes under subareas C2 to G2 corresponding to rows C to G, respectively. Similarly, a part of the glass ribbon 4, which passes under the subarea B4 in the upstream row B, mostly passes under subareas C4 to G4 corresponding to rows C to G, respectively.

In the adjacent two rows divided along the conveying direction of the glass ribbon, if the subareas adjoining in the conveying direction (the direction of arrows X1-X2) of the glass ribbon 4 differ from each other in the amount of heat generated per unit area, a temperature difference occurs between these adjoining subareas. The temperature difference also occurs in a predetermined part of the glass ribbon 4, which passes under these adjoining subareas. Thus, the thickness of the predetermined part of the glass ribbon 4 changes when passing under the adjoining subareas. According to the above embodiment, the thickness of the predetermined part located in the width direction of the glass ribbon 4 can be set at a desired value along the flow path. The variation in the thickness of the glass ribbon 4 can be maintained within an appropriate range.

According to the present embodiment, at least one place at which the sectioning is performed along the predetermined flow lines 61 and 62 exists in the heater area located above the predetermined area 6. In the predetermined area 6, the glass ribbon 4 is restrained from being narrowed by a plurality of pairs of top rolls 21 to 25. Thus, an advantage in reducing variation in the thickness can effectively be obtained. This is because the glass ribbon 4 is liable to shrink in the width direction in a natural state, so that the thickness thereof easily changes.

The predetermined flow lines 61 and 62 are preferably flow paths each corresponding to a part in which the thickness of the glass plate is greatly deviated from the average value thereof. Furthermore, regions in which subareas are formed along the predetermined flow lines 61 and 62 are regions in which the viscosity of the glass ribbon 4 passing thereunder ranges from 10^{5.3} dPa·s to 10^{5.7} dPa.s. This is because the variation in the thickness of the glass ribbon 4 greatly depends upon the shape of the glass ribbon 4 in this range. In the heater area located above the predetermined area 6, all rows into which the heater area is divided in the conveying direction of the glass ribbon are preferably sectioned along the predetermined flow lines 61 and 62.

In the embodiment illustrated in FIG. 7, two or more consecutive rows B to G into which the heater area is divided in the conveying direction of the glass ribbon are sectioned in the width direction along the predetermined flow lines 61 and 62 in the glass ribbon 4, similarly to the embodiment illustrated in FIG. 6. However, the sectioning portions 120d differs from those illustrated in FIG. 6 in that the sectioning portions 120d are formed into a step-shap in a part of the rows, i.e., the rows B, C, F, and G. Consequently, in the rows B, C, F, and G, the temperature of a predetermined part in the width direction of the glass ribbon 4 can be more strictly controlled. The shape of the sectioning portions 120d is not limited to a specific shape, as long as the sectioning is performed along the predetermined flow lines 61 and 62. For example, each of the sectioning portions 120d can have a curved-shape.

### EXAMPLES

Hereinafter, the present invention is described specifically with reference to examples. However, the present invention is not limited thereto.

In Example 1 (not according to the invention), glass ribbon was formed into a band plate-shape using an apparatus similar to the apparatus 10 illustrated in FIGs. 1 and 2. Next, the formed glass ribbon was annealed. Then, the glass ribbon was cut in the width direction thereof and a longitudinal direction (i.e., a direction coinciding with the conveying direction of the glass ribbon), so that parts contacted with the top rolls (i.e., both end portions in the width direction of the glass ribbon) were removed. Thus, glass plates having an average thickness of 0.7 mm were obtained.

The number of pairs of top rolls installed in the apparatus was set to 16 (thus, a total number of the top rolls was 32). Further, the subareas provided with heaters were set in the same way as in FIG. 3. More specifically, in the heater area located above the predetermined area of the glass ribbon, the heater area was divided into four rows along the conveying direction of the glass ribbon (i.e., the direction of arrows X1-X2), and each of the rows was sectioned into 7 to 11 subareas in the width direction (i.e., the direction of arrows Y1-Y2) of the glass ribbon. Among the dividing portions existing in the heater area located above the predetermined area in the glass ribbon, all the dividing portions other than the dividing portions at both ends of the heater area located above the central line of the glass ribbon in the conveying direction in the predetermined area were set to be discontinuous. Outputs of the heaters in each subarea were controlled so that the difference (T1 - T2 (hereinafter referred to as a "thickness deviation")) between the maximum thickness T1 and the minimum thickness T2 was minimized.

Next, the distribution of thickness in the width direction of the obtained glass plate was measured. Then, by employing the center point of the glass plate as a reference point, 75 measurement points were provided on each of both sides in the width direction at a pitch of 2 cm, that is, a total of 151 measurement points was provided. The thickness deviation was investigated according to results of the measurement. This investigation was performed on each of 100 sheets of glass plate to measure the average value and the maximum value of the thickness deviation. The thickness deviation measured using 151 measurement points was employed as that of a region having a length of 3000 mm, and the thickness deviation measured using 101 measurement points with employing the central point of the glass plate as a reference point was employed as that of a region having a length of 2000 mm. As a result of the measurement, the average value of the thickness deviation of the region having a length of 2000 mm was found to be 14.4 µm and the maximum value of the thickness deviation of the region having a length of 2000 mm was found to be 30 µm. Further, the average value of the thickness deviation of the region having a length of 3000 mm was found to be 16.9 µm and the maximum value of the thickness deviation of the region having a length of 3000 mm was found to be 34 µm.

In Example 2 (according to the invention), a glass plate was manufactured in the same manner as in Example 1, except that the wire connections between the heaters and the controllers were changed, and that the subareas of the region provided with the heaters were changed to as illustrated in FIG. 6. As a result, it was found that the average value of the thickness deviation of the region having a length of 2000 mm was 11.5 µm, that the maximum value of the thickness deviation of the region having a length of 2000 mm was 19 µm, that the average value of the thickness deviation of the region having a length of 3000 mm was 14.5 µm, and that the maximum value of the thickness deviation of the region having a length of 3000 mm was 25 µm.

In Comparative Example 1, a glass plate was manufactured in the same manner as in Example 1, except that the wire connections between the heaters and the controllers were changed, and that the subareas of the region provided with the heaters were changed to as illustrated in FIG. 8. Outputs of the heaters in each subarea were controlled so that the thickness deviation was minimized. As a result, the minimum value of the thickness deviation of the region having a length of 2000 mm was 100 µm.

### DESCRIPTION OF REFERENCE NUMERALS AND SIGNS

- 2: molten glass
- 4: glass ribbon
- 6: predetermined area
- 10: glass plate manufacturing apparatus
- 12: molten metal
- 13: bath surface
- 15: bath
- 16: ceiling
- 21: mostupstream top roll
- 25: mostdownstream top roll
- 41-48: heaters
- 51-58: controllers
- 61, 62: flow lines
- 110: dividing portion
- 120: sectioning portion

## Claims

1. A glass plate manufacturing apparatus which forms a glass ribbon by continuously supplying molten glass to a bath surface of a molten metal bath, and carries the glass ribbon forward along the bath surface, the apparatus comprising:
a plurality of pairs of top roll bodies configured to support end portions in a width direction of the glass ribbon;
a plurality of heaters provided in a predetermined heater area above the glass ribbon; and
a plurality of controllers,
wherein the heater area is divided to a plurality of rows arranged along a conveying direction of the glass ribbon,
wherein one or more of the heaters are provided in each subarea obtained by sectioning each of the rows in the width direction of the glass ribbon,
wherein the heater(s) within the respective subarea are collectively controlled by one of the controllers, which is provided corresponding to the subarea,
wherein a boundary between every two adjacent rows is taken as a dividing portion and a boundary between every two adjacent subareas in each of the rows is taken as a sectioning portion,
wherein at least one discontinuous point is present between sectioning portions in one of two adjacent rows in the heater area located between the mostupstream pair of the top rolls and the mostdownstream pair of the top rolls,
wherein each of the controllers is configured by a microcomputer; and
wherein in the heater area located between the mostupstream pair of the top rolls and the mostdownstream pair of the top rolls, the subareas are provided along a predetermined curved flow line of the glass ribbon and any of two or more consecutive rows among the plurality of rows are sectioned in the width direction so that the flow line passes under said subarea, wherein the predetermined curved flow line of the glass ribbon is a flow path through which a predetermined part located in the width direction of the glass ribbon steadily passes.

2. A glass plate manufacturing method comprising: forming a glass ribbon by continuously supplying molten glass to a bath surface of a molten metal bath; and carrying the glass ribbon from an upstream side to a downstream side on the bath surface,
wherein a temperature distribution is adjusted by a plurality of heaters and a plurality of controllers provided above the bath,
wherein a heater area provided with the plurality of heaters includes subareas configured by dividing the heater area into a plurality of rows in a conveying direction of the glass ribbon and by sectioning each of the rows into subareas in a width direction of the glass ribbon,
wherein the heater(s) provided within the respective subareas are collectively controlled by an associated one of the controllers,
wherein end portions of the glass ribbon are supported by a plurality of pairs of top rolls provided along the conveying direction of the glass ribbon, and
wherein at least one discontinuous point is present between sectioning portions in one of two adjacent rows among the plurality of rows in the heater area located between the mostupstream pair of the top rolls and the mostdownstream pair of the top rolls,
wherein each of the controllers is configured by a microcomputer; and
wherein in the heater area located between the mostupstream pair of the top rolls and the mostdownstream pair of the top rolls, the subareas are provided along a predetermined curved flow line of the glass ribbon and any of two or more consecutive rows among the plurality of rows are sectioned in the width direction so that the flow line passes under said subarea, wherein the predetermined curved flow line of the glass ribbon is a flow path through which a predetermined part located in the width direction of the glass ribbon steadily passes.

3. The glass plate manufacturing method according to claim 2, wherein in the glass plate a difference between a maximum thickness and a minimum thickness among a given range of 2000 mm in the width direction is 30 µm or less.

4. The glass plate manufacturing method according to claim 2, wherein in the glass plate a difference between a maximum thickness and a minimum thickness among a given range of 3000 mm in the width direction is 45 µm or less.

5. The glass plate manufacturing method according to claim 2, wherein in the glass plate a difference between a maximum thickness and a minimum thickness among a given range of 3000 mm in the width direction is 35 µm or less.

6. The glass plate manufacturing method according to claim 2, wherein the glass plate is a glass plate containing, as represented by mass percentage based on oxides:
SiO₂: 50 to 66 mass%;
Al₂O₃: 10.5 to 24 mass%;
B₂O₃: 0 to 12 mass%;
MgO: 0 to 8 mass%;
CaO: 0 to 14.5 mass%;
SrO: 0 to 24 mass%;
BaO: 0 to 13.5 mass%;
MgO + CaO + SrO + BaO: 9 to 29.5 mass%; and
ZrO₂: 0 to 5 mass%.

7. The glass plate manufacturing method according to claim 2, wherein the glass plate is a glass plate containing, as represented by mass percentage based on oxides:
SiO₂: 58 to 66 mass%;
Al₂O₃: 15 to 22 mass%;
B₂O₃: 5 to 12 mass%;
MgO: 0 to 8 mass%;
CaO: 0 to 9 mass%;
SrO: 3 to 12.5 mass%;
BaO: 0 to 2 mass%; and
MgO + CaO + SrO + BaO: 9 to 18 mass%.

## Patentansprüche

1. Glasplattenherstellungsvorrichtung, die ein Glasband bildet, indem sie kontinuierlich geschmolzenes Glas zu einer Badoberfläche eines Schmelzmetallbades zuführt und das Glasband entlang der Badoberfläche vorwärts trägt, wobei die Vorrichtung umfasst:
eine Vielzahl von Paaren von Oberwalzenkörpern, die ausgebildet sind, um Endabschnitte in einer Breitenrichtung des Glasbandes zu tragen;
eine Vielzahl von Heizelementen, die in einem vorbestimmten Heizbereich oberhalb des Glasbandes bereitgestellt sind; und
eine Vielzahl von Reglern,
wobei der Heizbereich in eine Vielzahl von Reihen unterteilt ist, die entlang einer Förderrichtung des Glasbandes angeordnet sind,
wobei einer oder mehrere der Heizelemente in jedem Teilbereich bereitgestellt sind, der durch das Schneiden jeder der Reihen in der Breitenrichtung des Glasbandes erhalten ist,
wobei das Heizelement / die Heizelemente innerhalb des jeweiligen Teilbereichs gemeinsam von einem der Regler gesteuert werden, der dem Teilbereich entsprechend bereitstellt ist,
wobei eine Grenze zwischen jeweils zwei benachbarten Reihen als Trennabschnitt und eine Grenze zwischen jeweils zwei benachbarten Teilbereichen in jeder der Reihen als Teilungsabschnitt angesehen wird,
wobei mindestens ein diskontinuierlicher Punkt zwischen den Teilungsabschnitten in einer von zwei benachbarten Reihen im Heizelementbereich vorhanden ist, der sich zwischen dem am meisten stromaufwärts gelegenen Paar der oberen Walzen und dem am meisten stromabwärts gelegenen Paar der oberen Walzen befindet,
wobei jeder der Regler durch einen Mikrocomputer konfiguriert wird; und
wobei in dem Heizelementbereich, der sich zwischen dem am meisten stromaufwärts gelegenen Paar der Oberwalzen und dem am meisten stromabwärts gelegenen Paar der Oberwalzen befindet, die Teilbereiche entlang einer vorbestimmten gekrümmten Strömungslinie des Glasbandes bereitgestellt sind und jede von zwei oder mehr aufeinanderfolgenden Reihen aus der Vielzahl von Reihen in der Breitenrichtung so aufgeteilt ist, dass die Strömungslinie unter der Teilfläche verläuft, wobei die vorbestimmte gekrümmte Strömungslinie des Glasbandes ein Strömungsweg ist, durch den ein vorbestimmter Teil, der sich in der Breitenrichtung des Glasbandes befindet, stetig verläuft.

2. Verfahren zur Herstellung einer Glasplatte, umfassend: das Bilden eines Glasbandes durch kontinuierliches Zuführen von geschmolzenem Glas zu einer Badoberfläche eines Schmelzmetallbades; und das Führen des Glasbandes von einer stromaufwärts gelegenen Seite zu einer stromabwärts gelegenen Seite auf der Badoberfläche,
wobei eine Temperaturverteilung durch eine Vielzahl von Heizelementen und eine Vielzahl von Reglern, die über dem Bad angeordnet sind, eingestellt wird, wobei ein mit der Vielzahl von Heizelementen versehener Heizelementbereich Teilbereiche beinhaltet, die durch Unterteilen des Heizelementbereichs in eine Vielzahl von Reihen in einer Förderrichtung des Glasbandes und durch Unterteilen jeder der Reihen in Teilbereiche in einer Breitenrichtung des Glasbandes angeordnet sind,
wobei das Heizelement / die Heizelemente, das / die innerhalb der jeweiligen Teilbereiche bereitgestellt ist / sind, gemeinsam durch einen zugehörigen der Regler gesteuert werden,
wobei die Endabschnitte des Glasbandes durch eine Vielzahl von Paaren von Oberwalzen getragen werden, die entlang der Förderrichtung des Glasbandes bereitgestellt sind, und
wobei mindestens ein diskontinuierlicher Punkt zwischen den Teilungsabschnitten in einer von zwei benachbarten Reihen unter der Vielzahl von Reihen im Heizelementbereich vorhanden ist, der sich zwischen dem am meisten stromaufwärts gelegenen Paar der Oberwalzen und dem am meisten stromabwärts gelegenen Paar der Oberwalzen befindet,
wobei jeder der Regler durch einen Mikrocomputer konfiguriert wird; und
wobei in dem Heizelementbereich, der sich zwischen dem am meisten stromaufwärts gelegenen Paar der Oberwalzen und dem am meisten stromabwärts gelegenen Paar der Oberwalzen befindet, die Teilbereiche entlang einer vorbestimmten gekrümmten Strömungslinie des Glasbandes bereitgestellt sind und jede von zwei oder mehr aufeinanderfolgenden Reihen aus der Vielzahl von Reihen in der Breitenrichtung so aufgeteilt ist, dass die Strömungslinie unter der Teilfläche verläuft, wobei die vorbestimmte gekrümmte Strömungslinie des Glasbandes ein Strömungsweg ist, durch den ein vorbestimmter Teil, der sich in der Breitenrichtung des Glasbandes befindet, stetig verläuft.

3. Verfahren zur Herstellung einer Glasplatte nach Anspruch 2, wobei in der Glasplatte eine Differenz zwischen einer maximalen Dicke und einer minimalen Dicke in einem gegebenen Bereich von 2000 mm in Breitenrichtung 30 µm oder weniger beträgt.

4. Verfahren zur Herstellung einer Glasplatte nach Anspruch 2, wobei in der Glasplatte eine Differenz zwischen einer maximalen Dicke und einer minimalen Dicke in einem gegebenen Bereich von 3000 mm in Breitenrichtung 45 µm oder weniger beträgt.

5. Verfahren zur Herstellung einer Glasplatte nach Anspruch 2, wobei in der Glasplatte eine Differenz zwischen einer maximalen Dicke und einer minimalen Dicke in einem gegebenen Bereich von 3000 mm in Breitenrichtung 35 µm oder weniger beträgt.

6. Verfahren zur Herstellung einer Glasplatte nach Anspruch 2, wobei die Glasplatte eine Glasplatte ist, die, dargestellt durch Massenprozent basierend auf Oxide, enthält:
SiO₂: 50 bis 66 Massen%;
Al₂O₃: 10,5 bis 24 Massen%;
B₂O₃: 0 bis 12 Massen%;
MgO: 0 bis 8 Massen%;
CaO: 0 bis 14,5 Massen%;
SrO: 0 bis 24 Massen%;
BaO: 0 bis 13,5 Massen%;
MgO + CaO + SrO + BaO: 9 bis 29,5 Massen%; und
ZrO₂: 0 bis 5 Massen%.

7. Verfahren zur Herstellung einer Glasplatte nach Anspruch 2, wobei die Glasplatte eine Glasplatte ist, die, dargestellt durch Massenprozent basierend auf Oxide, enthält:
SiO₂: 58 bis 66 Massen%;
Al₂O₃: 15 bis 22 Massen%;
B₂O₃: 5 bis 12 Massen%;
MgO: 0 bis 8 Massen%;
CaO: 0 bis 9 Massen%;
SrO: 3 bis 12,5 Massen%;
BaO: 0 bis 2 Massen%; und
MgO + CaO + SrO + BaO: 9 bis 18 Massen%.

## Revendications

1. Appareil de fabrication d'une plaque de verre qui forme un ruban de verre en alimentant en continu du verre fondu vers la surface d'un bain d'un bain de métal fondu, et transporte le ruban de verre le long de la surface de bain, l'appareil comprenant:
une pluralité de paires de corps de cylindres supérieurs configurés pour supporter des parties terminales dans la direction de la largeur du ruban de verre;
une pluralité de dispositifs de chauffe mis à disposition dans une zone à dispositifs de chauffe prédéterminée au-dessus du ruban de verre; et
une pluralité de contrôleurs,
dans lequel la zone à dispositifs de chauffe est divisée en une pluralité de rangées disposées le long du sens de convoyage du ruban de verre,
dans lequel un ou plusieurs des dispositifs de chauffe sont mis à disposition dans chaque sous-zone obtenue par sectionnement de chacune des rangées dans le sens de la largeur du ruban de verre,
dans lequel le(s) dispositif(s) de chauffe au sein de la sous-zone respective est(sont) collectivement contrôlé(s) par l'un des contrôleurs, mis à disposition en fonction de la sous-zone, dans lequel une délimitation entre toutes les deux rangées adjacentes est prise comme partie de division et une délimitation entre toutes les deux sous-zones adjacentes dans chacune des rangées est prise comme une partie de sectionnement,
dans lequel au moins un point discontinu est présent entre les parties de sectionnement dans l'une de deux rangées adjacentes dans la zone à dispositifs de chauffe située entre la paire la plus en amont des cylindres supérieurs et la paire la plus en aval des cylindres supérieurs, dans lequel chacun des contrôleurs est configuré par un micro-ordinateur; et
dans lequel dans la zone à dispositifs de chauffe située entre la paire la plus en amont des cylindres supérieurs et la paire la plus en aval des cylindres supérieurs, les sous-zones sont mises à disposition sur une ligne de flux incurvée prédéterminée du ruban de verre et de quelconques deux rangées successives, ou plus, parmi la pluralité de rangées, sont sectionnées dans le sens de la largeur de sorte que la ligne de flux passe en dessous de ladite sous-zone, dans lequel la ligne de flux incurvée prédéterminée du ruban de verre est une trajectoire de flux à travers laquelle une partie prédéterminée située dans le sens de la largeur du ruban de verre passe sans discontinuer.

2. Procédé de fabrication d'une plaque de verre comprenant: la formation d'un ruban de verre en alimentant en continu du verre fondu vers la surface d'un bain d'un bain de métal en fusion; et le transport du ruban de verre depuis un côté en amont vers un côté en aval sur la surface de bain,
dans lequel la distribution des températures est réglée par une pluralité de dispositifs de chauffe et une pluralité de contrôleurs mises à disposition au-dessus du bain, dans lequel une zone à dispositifs de chauffe avec la pluralité de dispositifs de chauffe comprend des sous-zones configurées en divisant la zone à dispositif de chauffe en une pluralité de rangées dans un sens de convoyage du ruban de verre et en sectionnant chacune des rangées en sous-zones dans le sens de la largeur du ruban de verre,
dans lequel le(s) dispositif(s) de chauffe mis à disposition au sein des sous-zones respectives est(sont) collectivement commandé(s) par l'un associé des contrôleurs, dans lequel les parties terminales du ruban de verre sont supportées par une pluralité de paires de cylindres supérieurs mis à disposition dans le sens de convoyage du ruban de verre, et
dans lequel au moins un point discontinu est présent entre les parties de sectionnement dans l'une de deux rangées adjacentes parmi la pluralité de rangées dans la zone à dispositifs de chauffe située entre la paire la plus en amont des cylindres supérieurs et la paire la plus en aval des cylindres supérieurs,
dans lequel chacun des contrôleurs est configuré par un micro-ordinateur; et
dans lequel, dans la zone à dispositifs de chauffe située entre la paire la plus en amont des cylindre supérieurs et la paire la plus en aval des cylindres supérieurs, les sous-zones sont mises à disposition sur une ligne de flux incurvée prédéterminée du ruban de verre et de quelconques deux rangées successives, ou plus, parmi la pluralité de rangées, sont sectionnées dans le sens de la largeur de sorte que la ligne de flux passe en dessous de ladite sous-zone, dans lequel la ligne de flux incurvée prédéterminée du ruban de verre est une trajectoire de flux à travers laquelle une partie prédéterminée située dans le sens de la largeur du ruban de verre passe sans discontinuer.

3. Procédé de fabrication d'une plaque de verre selon la revendication 2, dans lequel, dans la plaque de verre, la différence entre une épaisseur maximale et l'épaisseur minimale parmi une rangée donnée de 2000 mm dans le sens de la largeur, est de 30 µm ou moins.

4. Procédé de fabrication d'une plaque de verre selon la revendication 2, dans lequel, dans la plaque de verre, la différence entre une épaisseur maximale et l'épaisseur minimale parmi une rangée donnée de 3000 mm dans le sens de la largeur, est de 45 µm ou moins.

5. Procédé de fabrication d'une plaque de verre selon la revendication 2, dans lequel, dans la plaque de verre, la différence entre une épaisseur maximale et l'épaisseur minimale parmi une rangée donnée de 3000 mm dans le sens de la largeur, est de 35 µm ou moins.

6. Procédé de fabrication d'une plaque de verre selon la revendication 2, dans lequel la plaque de verre est une plaque de verre contenant, ainsi représenté en pour-cent en masse, sur base des oxydes:
SiO₂: de 50 à 66% en masse;
Al₂O₃: de 10,5 à 24% en masse;
B₂O₃: de 0 à 12% en masse;
MgO: de 0 à 8% en masse;
CaO: de 0 à 14,5% en masse;
SrO: de 0 à 24% en masse;
BaO: de 0 à 13,5% en masse;
MgO + CaO + SrO + BaO: de 9 à 29,5% en masse; et
ZrO₂: de 0 à 5% en masse.

7. Procédé de fabrication d'une plaque de verre selon la revendication 2, dans lequel la plaque de verre est une plaque de verre contenant, ainsi représenté en pour-cent en masse, sur base des oxydes:
SiO₂: de 58 à 66% en masse;
Al₂O₃: de 15 à 22% en masse;
B₂O₃: de 5 à 12% en masse;
MgO: de 0 à 8% en masse;
CaO: de 0 à 9% en masse;
SrO: de 3 à 12,5% en masse;
BaO: de 0 à 2% en masse; et
MgO + CaO + SrO + BaO: de 9 à 18% en masse.
